(19) Europäisches Patentamt
European Patent Office
Office européen des brevets

(11) **EP 2 748 445 B1**

(12) **EUROPEAN PATENT SPECIFICATION**

(45) Date of publication and mention of the grant of the patent:
**14.09.2016 Bulletin 2016/37**

(51) Int Cl.:
*F02C 9/28* (2006.01)   *F23N 5/16* (2006.01)
*F23R 3/52* (2006.01)

(21) Application number: **12784688.9**

(86) International application number:
**PCT/IB2012/054959**

(22) Date of filing: **19.09.2012**

(87) International publication number:
**WO 2013/042049 (28.03.2013 Gazette 2013/13)**

(54) **METHOD FOR DETECTING BURNER MALFUNCTIONS IN A GAS TURBINE COMBUSTION CHAMBER USING FREQUENCY SPECTRA ANALYSIS OF PRESSURE OSCILLATIONS**

VERFAHREN ZUR ERKENNUNG VON FEHLFUNKTIONEN VON GASTURBINENBRENNERN MITTELS FREQUENZSPEKTRENANALYSE VON DRUCKSCHWANKUNGEN

PROCÉDÉ POUR LA DÉTECTION DE DISFONCTIONNEMENTS DES BRÛLEURS DE TURBINE À GAZ PAR ANALYSE DES SPECTRES DE FRÉQUENCE DES OSCILLATIONS DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2011 IT MI20111689**

(43) Date of publication of application:
**02.07.2014 Bulletin 2014/27**

(73) Proprietor: **Ansaldo Energia S.p.A.**
**Genova (IT)**

(72) Inventors:
• **BONZANI, Federico**
**16156 Genova (IT)**
• **CACCIACARNE, Stefano**
**16148 Genova (IT)**
• **ZITO, Domenico**
**16154 Genova (IT)**
• **PIANA, Carlo**
**21100 Varese (IT)**

(74) Representative: **Bernotti, Andrea et al**
**Studio Torta S.p.A.**
**Via Viotti, 9**
**10121 Torino (IT)**

(56) References cited:
**EP-A1- 1 286 031**       **WO-A1-2008/080639**
**US-A1- 2006 090 471**

**EP 2 748 445 B1**

**Description**

TECHNICAL FIELD

The present invention relates to a method for detecting malfunctions in a combustion chamber of a gas turbine plant.

BACKGROUND ART

As known, current standards and distribution network requirements make the need for high-performance gas turbine plants with very low environmental impact in terms of polluting emissions increasingly more urgent.

In particular, the combustion process which, especially in certain operative modes, is taken to the stability limit must be controlled very carefully in order to reduce polluting emissions. Thermo-acoustic instability phenomena, frequently also known as "humming", which deteriorate the performance of the plant and must thus be avoided, may occur under these conditions.

In addition to control accuracy, the plant burners must be under optimal efficiency conditions. Indeed, emission level and performance are difficult to be respected if they are not so.

On the other hand, monitoring some combustion parameters is fundamental for evaluating the process quality and the onset of possible deterioration states which could require maintenance operations. In this case, *inter alia,* it is very important to accurately locate the malfunctions in order to minimize intervention time and machine downtime, which usually result in high costs.

It is current practice to use information deriving from a plurality of thermocouples arranged at the turbine outlet and uniformly spaced apart along a circumference. The flow fed to the combustion chamber and then processed by the turbine maintains a certain level of coherence, whereby the angular position of a group of burners to which the fluid stream itself substantially corresponds can be determined, albeit approximately, from the angular position of each thermocouple. In particular, in case of malfunction, the abnormal data supplied by a thermocouple are referable to a group of burners, at least one of which is the location of the malfunction. However, a single burner suspected of being faulty cannot be located because of the partial mixing of the fluid between combustion chamber inlet and the turbine outlet. Groups of three-to-five burners which must be individually inspected during the maintenance stop are normally identified. Furthermore, the processed flow rotation also depends on the gas turbine load. The angular relationship between thermocouples and burners is thus not fixed and for this reason it is even more difficult to be accurately determined.

An example of a known method for detecting malfunctions in a combustion chamber of a gas turbine plant is disclosed in WO 2008/080639 A1. According to the disclosure, in a gas turbine having a combustion chamber with a plurality of burners, dynamic pressure signals indicating dynamic pressure at each burner are provided and each burner is identified on the basis of a bijective correlation between the burners and the respective dynamic pressure signals.

DISCLOSURE OF INVENTION

Therefore, it is the object of the present invention to provide a method for detecting malfunctions in a combustion chamber of a gas turbine plant.

According to the present invention, a method for detecting malfunctions in a combustion chamber of a gas turbine plant is provided as defined in claim 1.

BRIEF DESCRIPTION OF THE DRAWINGS

The present invention will now be described with reference to the accompanying drawings, which show a non-limitative embodiment thereof, in which:

- figure 1 is a side view taken along a longitudinal plane of a portion of a gas turbine plant;
- figure 2 is a simplified front view of the plant portion in figure 1;
- figure 3 is a simplified block chart of part of the plant in figure 1;
- figure 4 is a chart showing magnitudes related to the plant in figure 1;
- figure 5 is a simplified flow chart of a first procedure in accordance with an embodiment of the method according to the present invention; and
- figure 6 is a simplified flow chart of a second procedure in accordance with an embodiment of the method according to the present invention.

BEST MODE FOR CARRYING OUT THE INVENTION

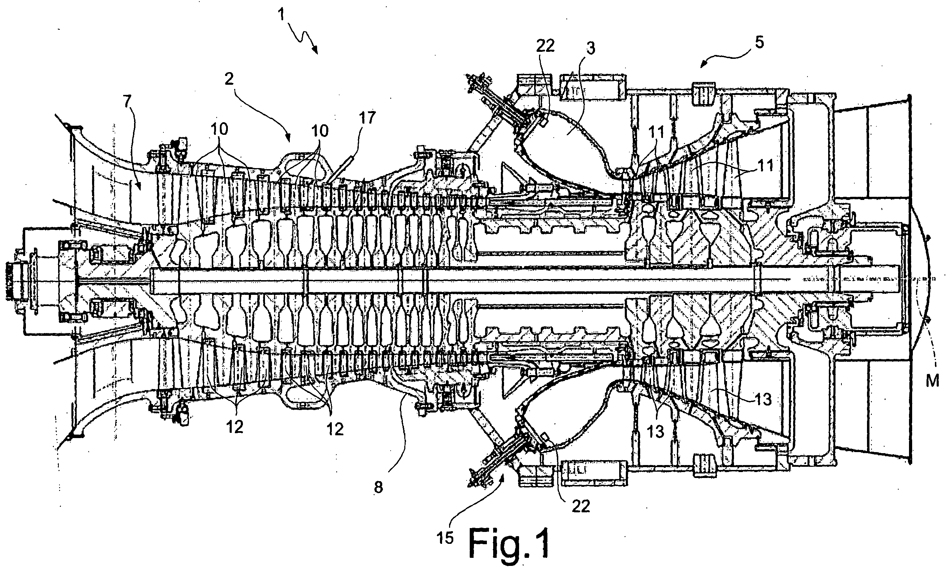

With reference to figure 1, a gas turbine plant for the production of electricity is indicated as a whole by reference numeral 1 and comprises a compressor 2, a combustion chamber 3 and a turbine 5.

Compressor 2 and turbine 5 are mounted to the same shaft to form a rotor 7, which is accommodated in a casing 8 and extends along an axis M.

More in detail, rotor 7 is provided with a plurality of compressor rotor blades 10 and turbine rotor blades 11, organized in annular arrays, which are sequentially arranged along the axis M of the rotor 7 itself.

Corresponding arrays of compressor stator blades 12 and turbine stator blades 13 are fixed to casing 8 and spaced apart between the compressor rotor blades 10 and the turbine rotor blades 11, respectively.

In the embodiment described herein, the combustion chamber 3 is of the toroidal type and is arranged about the rotor 7 between compressor 2 and turbine 5.

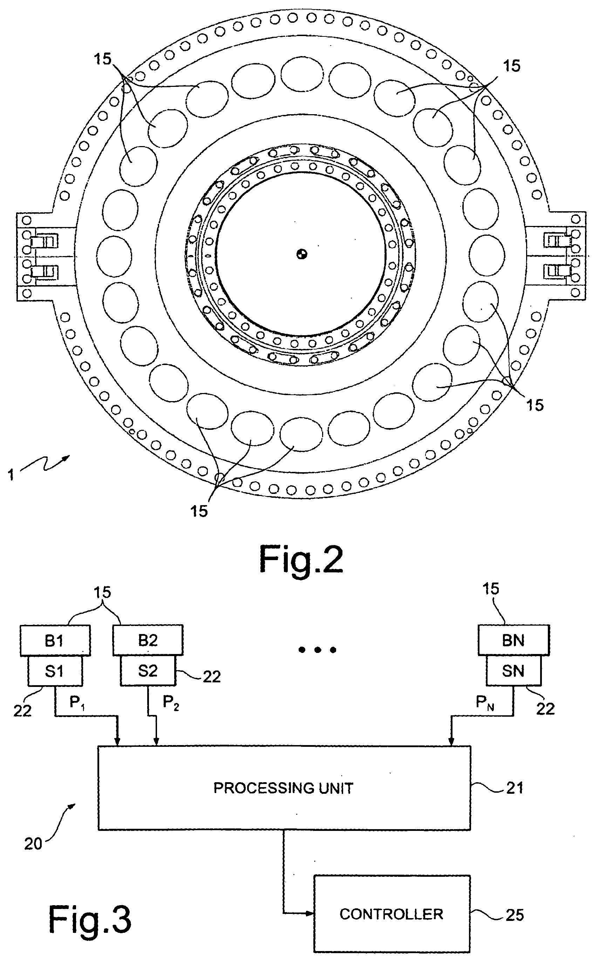

Combustion chamber 3 comprises a plurality of burners 15. As also shown in figure 2, the burners 15 are arranged on a circumference and angularly spaced apart in a uniform manner. In one embodiment, in particular, there are 24 burners 15 and the angle between two adjacent burners 15 is 15°.

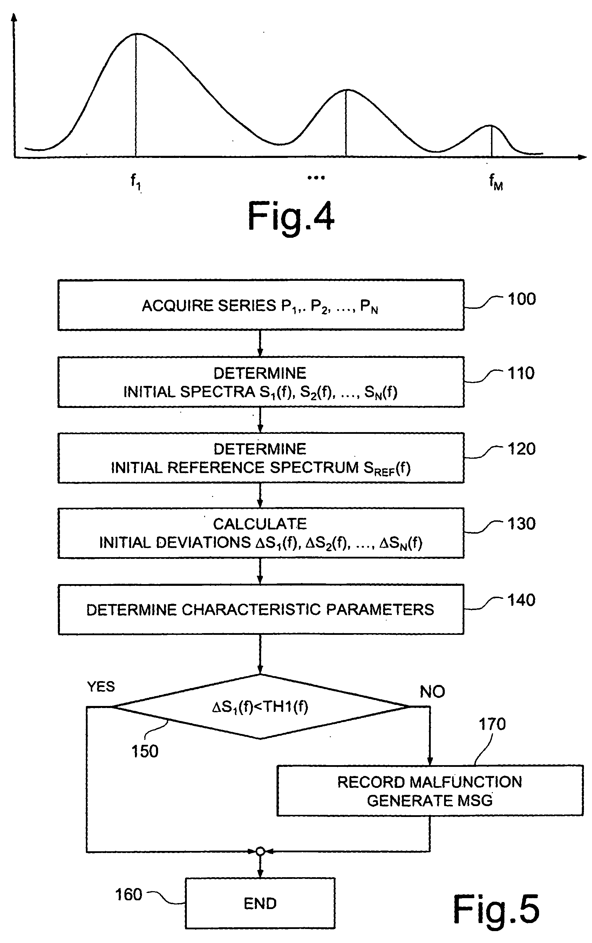

As shown in figure 3, an apparatus 20 for monitoring thermo-acoustic instabilities comprises a processing unit 21 and a plurality of dynamic pressure sensors 22. More specifically, the number of dynamic pressure sensors 22 is equal to the number of burners 15 and are each coupled to a respective burner 15. Each dynamic pressure sensor 22 is arranged so as to detect the pressure oscillations in the combustion chamber 3 at the respective burner 15. The dynamic pressure signals $P_1$, $P_2$, ..., $P_N$ (N = 24 in the described embodiment), indicative of the pressure detected at the respective burners 15, are supplied to the processing unit 21 to be processed as described below. Each dynamic pressure signal $P_1$, $P_2$, ..., $P_N$ is identified by a label, for example, so as to be referable to the respective dynamic pressure sensor 22 and therefore to the respective burner 15. The harmonic content of the dynamic pressure signals $P_1$, $P_2$, ..., $P_N$ is determined by the pressure oscillations due to the combustion immediately close to the respective burners 15. The spectrum of a possible dynamic pressure signal $P_I$ is shown by way of mere example in figure 4. It is however useful to observe that the characteristic parameters of the dynamic pressure signal spectra $P_1$, $P_2$, ..., $P_N$ depend on the machine type and tend to vary with age, while remaining recognizable. In particular, the spectra of the dynamic pressure signals $P_1$, $P_2$, ..., $P_N$ have the same number of peak frequency maximums $f_1$, ..., $f_M$ which slightly vary from signal to signal over time. In some machine types, for example, each spectrum has three peaks at about $f_1$ = 90 Hz, $f_2$ = 120 Hz and $f_3$ = 170 Hz, respectively (as shown in the example in figure 4). The peak amplitude varies as a function of the burner ageing and, over time, the higher frequency contributions tend to have a higher weight.

The processing unit 21 uses the dynamic pressure signals $P_1$, $P_2$, ..., $P_N$ in order to individually determine the operating state of each burner 15 and, in case of malfunctions, to supply an alarm message MSG to a plant controller 25. Furthermore, the processing unit 21 uses the dynamic pressure signals $P_1$, $P_2$, ..., $P_N$ to locate the burner 15 where the malfunction occurs.

In practice, the processing unit 21 determines the initial operation condition of the burners 15 under reference conditions at the first activation, and therefore follows the evolution of the general operating conditions of the burners 15 over time, identifying possible abnormal dynamics, by means of a continuous or periodical monitoring, but at close intervals.

"First activation" means herein the start-up of a gas turbine plant once it has been built, after a maintenance operation involving one or more burners 15, once the apparatus 20 has been installed, if it was absent originally, or in all cases once the apparatus 20 has been re-initialized.

Moreover, the reference conditions are repeatable operating conditions defined by a set of parameters (e.g. environmental technical minimum conditions, base load, maximum load).

Figure 5 shows the procedure carried out by the processing unit 21 at the first activation of plant 1.

The processing unit 21 starts acquiring time series of dynamic pressure signals $P_1$, $P_2$, ..., $P_N$ from the dynamic pressure sensors 22 (block 100).

Thus (block 110), an initial spectrum $S_1(f)$, $S_2(f)$, ..., $S_N(f)$ is determined from a predetermined number of samples, e.g. by means of FFT, of each dynamic pressure signal $P_1$, $P_2$, ..., $P_N$.

The processing unit 21 then determines an initial reference spectrum $S_{REF}(f)$ form the average of the initial spectra $S_1(f)$, $S_2(f)$, ..., $S_N(f)$ on the whole useful band of the dynamic pressure signals $P_1$, $P_2$, .., $P_N$ (block 120):

$$S_{REF}(f) = \frac{1}{N} \sum_{I=1}^{N} S_I(f) \tag{1}$$

The useful band is an interval of frequencies f in which the dynamic pressure signals $P_1$, $P_2$, ..., $P_N$ are significantly different from zero.

Once the initial reference spectrum $S_{REF}(f)$ has been determined, the processing unit 21 calculates the initial deviation $\Delta S_1(f)$, $\Delta S_2(f)$, ..., $\Delta S_N(f)$ of each initial spectrum $S_1(f)$, $S_2(f)$, ..., $S_N(f)$ with respect to the initial reference spectrum $S_{REF}(f)$ (block 130):

$$\Delta S_I(f) = |S_I(f) - S_{REF}(f)| \quad I = 1, 2, ..., N \qquad (2)$$

The calculation of the initial deviations $\Delta S_1(f)$, $\Delta S_2(f)$, ..., $\Delta S_N(f)$ is extended to the whole useful band of the dynamic pressure signals $P_1$, $P_2$, ..., $P_N$.

Furthermore, characteristic parameters, such as in particular frequency and amplitude of the spectrum peaks (block 140), are determined for each initial spectrum $S_1(f)$, $S_2(f)$, ..., $S_N(f)$.

The processing unit 21 then carries out a first check on the initial deviations $\Delta S_1(f)$, $\Delta S_2(f)$, ..., $\Delta S_N(f)$ with respect to the initial reference spectrum $S_{REF}(f)$ (block 150).

During this step, the processing unit 21 compares the initial deviations $\Delta S_1(f)$, $\Delta S_2(f)$, ..., $\Delta S_N(f)$ with an initial deviation threshold TH1(f) which may be determined experimentally. In one embodiment, the threshold TH1(f) is constant for the whole useful band of the dynamic pressure signals $P_1$, $P_2$, ..., $P_N$.

If the initial deviations $\Delta S_1(f)$, $\Delta S_2(f)$, ..., $\Delta S_N(f)$ are lower than threshold TH1(f) on the whole useful band (block 150, YES output), the check is successful and the procedure ends (block 160). If instead the initial deviation $\Delta S_I(f)$ of an initial spectrum $S_I(f)$ exceeds the threshold TH1(f) for one or more frequencies f (block 150, NO output), the processing unit 21 records a malfunction (block 170). In this case, an alarm signal MSG for the plant controller 25 is generated. The alarm message MSG indicates that at least one of the burners 15 displays abnormal thermo-acoustic vibration phenomena. The alarm message MSG preferably contains a field which identifies the burner (or burners) 15 subject to malfunction, according to the bijective correlation between the burners 15 and the respective dynamic pressure signals $P_1$, $P_2$, ..., $P_N$. Alternatively, the dynamic pressure signals $P_1$, $P_2$, ..., $P_N$ may be acquired on respective distinct (and thus identifiable) terminals or in turn by one or more terminals according to a predetermined sequence.

The processing unit 21 periodically runs further checks starting from new acquisitions of the dynamic pressure signals $P_1$, $P_2$, ..., $P_N$, compares the updated spectral parameters and compares the initial spectral parameters with the updated spectral parameters, and determines the possible presence of malfunctions on the basis of the cross-comparisons made.

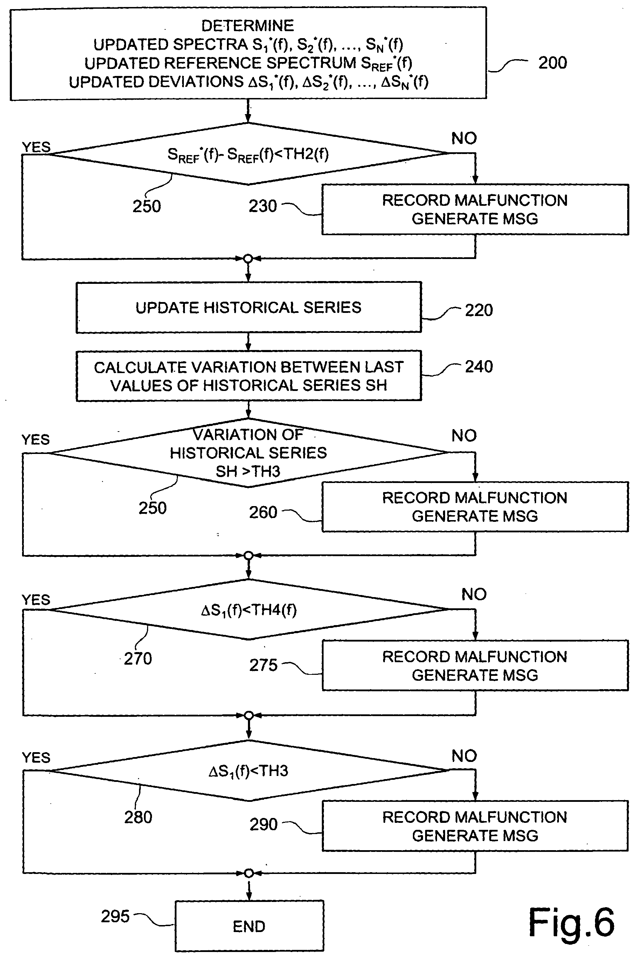

As shown in figure 6, in particular, the processing unit determines (block 200) updated spectra $S_1^*(f)$, $S_2^*(f)$, ..., $S_N^*(f)$, an updated reference spectrum $S_{REF}^*(f)$ and updated deviations $\Delta S_1^*(f)$, $\Delta S_2^*(f)$, ..., $\Delta S_N^*(f)$ of the updated spectra $S_1^*(f)$, $S_2^*(f)$, ..., $S_N^*(f)$ with respect to the updated reference spectrum $S_{REF}^*(f)$ starting from new acquisitions of the dynamic pressure signals $P_1$, $P_2$, ..., $P_N$. For this purpose, the processing unit 21 uses relationships (1) and (2) and the steps already described with reference to figure 5 (blocks 110-130). Moreover, characteristic parameters of the updated spectra $S_1^*(f)$, $S_2^*(f)$, ..., $S_N^*(f)$ (in particular, frequency and amplitude of the spectral peaks about the characteristic frequencies, i.e. about the peak frequencies of the initial spectra $S_1(f)$, $S_2(f)$, ..., $S_N(f)$) are extracted.

Tests are then run as described below.

Firstly, the updated reference spectrum $S_{REF}^*(f)$ is compared with the initial reference spectrum $S_{REF}(f)$ (block 210). If the difference between the updated reference spectrum $S_{REF}^*(f)$ and the initial reference spectrum $S_{REF}(f)$ is lower than a reference threshold TH2(f) on the whole useful band (block 210, YES output), the updated reference spectrum $S_{REF}^*(f)$ is used to update a historical series SH (figure 6, block 220). In contrast, if the threshold TH2(f) is exceeded by at least one frequency f (block 210, NO output), a malfunction is determined and an alarm message MSG indicative of a general deterioration state of the burners 15 (block 230) is generated before updating the historical series SH (block 220).

Once the historical series SH has been updated, the processing unit 21 calculates the variation between the last values of the historical series SH itself (block 240). If the variation of the historical series exceeds a variation threshold TH3 (block 250, NO output), a malfunction is determined and an alarm message MSG indicative of a general deterioration state of the burners 15 is generated (block 260).

Otherwise (block 250, YES output), the processing unit 21 directly proceeds with a new test, which evaluates the extent of the updated deviations $\Delta S_1^*(f)$, $\Delta S_2^*(f)$, ..., $\Delta S_N^*(f)$ (block 270). If, in at least one case, one of the updated deviations $\Delta S_1^*(f)$, $\Delta S_2^*(f)$, ..., $\Delta S_N^*(f)$ exceeds a deviation threshold TH4(f) (block 270, NO output), the processing unit 21 generates a malfunction alarm message MSG, with an identification field of the concerned burners 15.

If, instead, the updated deviations $\Delta S_1^*(f)$, $\Delta S_2^*(f)$, ..., $\Delta S_N^*(f)$ are lower than the threshold TH4(f) on the whole useful band (block 270, YES output), a new test of the characteristic parameters is directly carried out to identify deterioration signs from the single updated spectra $S_1^*(f)$, $S_2^*(f)$, ..., $S_N^*(f)$ (block 280). In particular, the relative weight of the spectral components about the peak frequencies is evaluated because the deterioration of the burners 15 tends to increase the weight of the components with the highest frequency. For this purpose, in one embodiment, the processing unit 21 determines sub-bands $\Delta f_1$, ..., $\Delta f_M$ about the peak frequencies $f_1$, ..., $f_M$ of the initial reference spectrum $S_{REF}(f)$. The contributions of the sub-bands $\Delta f_1$, ..., $\Delta f_M$ of each updated spectrum $S_1^*(f)$, $S_2^*(f)$, ..., $S_N^*(f)$ are calculated by integration, and then the contributions of each spectrum are compared with one another to determine the relative weight of each of them. If the relative weight of one or more of the sub-bands $\Delta f_1$, ..., $\Delta f_M$ increases by a predetermined measure as compared to the relative weight in the corresponding initial spectrum $S_1(f)$, $S_2(f)$, ..., $S_N(f)$, the processing unit 21 determines a malfunction and accordingly generates an alarm message MSG (block 290), thus the procedure ends (block 295). Otherwise (block 280, YES output), the procedure ends (295) without generating any alarm (block 295). In a different embodiment, the processing unit 21 determines the maximums of the updated spectra $S_1^*(f)$, $S_2^*(f)$, ..., $S_N^*(f)$ in the sub-bands $\Delta f_1$, ..., $\Delta f_M$ and compares the relative weights of the maximums to determine possible malfunctions.

The described method allows to constantly monitor thermo-acoustic phenomena and to supervise the deterioration process of the burners, thus identifying possible malfunctions due both to normal ageing and to punctual events (e.g. dirt drawn by the combustible gas). Moreover, malfunctions may be localized and directly correlated to one of the burners. Thereby, maintenance intervention times and costs may be drastically reduced.

It is finally apparent that changes and variations can be made to the described method, without departing from the scope of the present invention as defined in the appended claims.

**Claims**

1.  A method for detecting malfunctions in a combustion chamber of a gas turbine plant having a plurality of burners (15), the method comprising:

    providing dynamic pressure signals (P1, PS, ..., PN) each indicative of a dynamic pressure at a respective burner (15);
    identifying each burner (15) subject to malfunctioning on the basis of a bijective correlation between the burners (15) and the respective dynamic pressure signals ($P_1$, $P_2$, ..., $P_N$) ;
    **characterized by**:

    calculating frequency spectra ($S_1(f)$, $S_2(f)$, ..., $S_N(f)$, $S_1^*(f)$, $S_2^*(f)$, ..., $S_N^*(f)$) of the dynamic pressure signals ($P_1$, $P_2$, ..., $P_N$) ;
    recognizing malfunctions of the burners (15) according to the frequency spectra ($S_1(f)$, $S_2(f)$, ..., $S_N(f)$, $S_1^*(f)$, $S_2^*(f)$, ..., $S_N^*(f)$).

2.  A method according to claim 1, wherein calculating frequency spectra ($S_1(f)$, $S_2(f)$, ..., $S_N(f)$, $S_1^*(f)$, $S_2^*(f)$, ..., $S_N^*(f)$) comprises:

    calculating initial frequency spectra ($S_1(f)$, $S_2(f)$, ..., $S_N(f)$) at a first start of the plant (1);
    calculating an initial reference spectrum ($S_{RIF}$) on the basis of the initial frequency spectra ($S_1(f)$, $S_2(f)$, ..., $S_N(f)$); and
    generating an alarm message (MSG) in case of malfunctioning.

3.  A method according to claim 2, wherein the initial reference spectrum ($S_{RIF}$) is calculated according to an average of the initial frequency spectra ($S_1(f)$, $S_2(f)$, ..., $S_N(f)$).

4.  A method according to claim 2 or 3, wherein recognizing malfunctions of the burners (15) comprises:

    determining initial deviations ($\Delta S_1(f)$, $\Delta S_2(f)$, ..., $\Delta S_N(f)$) of the initial frequency spectra ($S_1(f)$, $S_2(f)$, ..., $S_N(f)$) with respect to the initial reference spectrum ($S_{RIF}$);
    comparing the initial deviations ($\Delta S_1(f)$, $\Delta S_2(f)$, ..., $\Delta S_N(f)$) with an initial deviation threshold (TH1(f)); and
    recognizing a malfunction if one of the initial frequency spectra ($S_1(f)$, $S_2(f)$, ..., $S_N(f)$) exceeds the initial deviation threshold (TH1(f)) at at least one frequency (f).

5.  A method according to any one of the claims 2 to 4, wherein calculating frequency spectra ($S_1(f)$, $S_2(f)$, ..., $S_N(f)$, $S_1^*(f)$, $S_2^*(f)$, ..., $S_N^*(f)$) comprises:

    calculating updated frequency spectra ($S_1^*(f)$, $S_2^*(f)$, ..., $S_N^*(f)$), following the initial frequency spectra ($S_1(f)$, $S_2(f)$, ..., $S_N(f)$); and
    calculating an updated reference spectrum ($S_{RIF}^*$) according to the updated frequency spectra ($S_1^*(f)$, $S_2^*(f)$,

$..., S_N^*(f))$.

6. A method according to claim 5, wherein recognizing malfunctions of the burners (15) comprises:

determining updated deviations ($\Delta S_1^*(f)$, $\Delta S_2^*(f)$, ..., $\Delta S_N^*(f)$) of the updated frequency spectra ($S_1^*(f)$, $S_2^*(f)$, ..., $S_N^*(f)$) with respect to the initial reference spectrum ($S_{RIF}$);
comparing the updated deviations ($\Delta S_1^*(f)$, $\Delta S_2^*(f)$, ..., $\Delta S_N^*(f)$) with an updated deviation threshold (TH4(f)); and
recognizing a malfunction if one of the updated frequency spectra ($S_1^*(f)$, $S_2^*(f)$, ..., $S_N^*(f)$) exceeds the updated deviation threshold (TH4(f)) at at least one frequency (f).

7. A method according to claim 5 or 6, wherein recognizing malfunctions of the burners (15) comprises determining a malfunction if a difference between the updated reference spectrum ($S_{REF}^*(f)$) and the initial reference spectrum ($S_{REF}(f)$) exceeds a reference threshold (TH2(f)) at at least one frequency (f).

8. A method according to claim 7, wherein recognizing malfunctions of the burners (15) comprises:

updating an historical series (SH) of reference spectra if the difference between the updated reference spectrum ($S_{REF}^*(f)$) and the initial reference spectrum ($S_{REF}(f)$) is less than the reference threshold (TH2(f)) at each frequency (f);
calculating a variation between the last values of the historical series (SH); and
determining a malfunction if the variation between the last values of the historical series (SH) exceeds a variation threshold (TH3).

9. A method according to any one of the claims 5 to 8, wherein recognizing malfunctions of the burners (15) comprises:

determining peak frequencies ($f_1$, ..., $f_M$) of the initial reference spectrum ($S_{REF}(f)$);
determining sub-bands ($\Delta f_1$, ..., $\Delta f_M$) about the peak frequencies ($f_1$, ..., $f_M$);
determining spectral contributions of each updated spectrum ($S_1^*(f)$, $S_2^*(f)$, ..., $S_N^*(f)$) in each sub-band ($\Delta f_1$, ..., $\Delta f_M$);
comparing the spectral contributions of each updated spectrum ($S_1^*(f)$, $S_2^*(f)$, ..., $S_N^*(f)$) in the sub-bands ($\Delta f_1$, ..., $\Delta f_M$) with one another; and
recognizing malfunctions according to the comparison.

10. A method according to claim 9, wherein determining spectral contributions comprises integrating the updated spectra ($S_1^*(f)$, $S_2^*(f)$, ..., $S_N^*(f)$) in the sub-bands ($\Delta f_1$, ..., $\Delta f_M$).

11. A method according to claim 9, wherein determining spectral contributions comprises determining maximums of the updated spectra ($S_1^*(f)$, $S_2^*(f)$, ..., $S_N^*(f)$) in the sub-bands ($\Delta f_1$, ..., $\Delta f_M$) and wherein comparing the spectral contributions with one another comprises comparing the maximums with one another.

**Patentansprüche**

1. Verfahren zum Detektieren von Fehlfunktionen in einer Brennkammer einer Gasturbinenanlage, die mehrere Brenner (15) besitzt, wobei das Verfahren Folgendes umfasst:

Bereitstellen von Signalen ($P_1$, $P_2$, ..., $P_N$) des dynamischen Drucks, wovon jedes einen dynamischen Druck bei einem jeweiligen Brenner (15) angibt; und
Identifizieren jedes Brenners (15), bei dem eine Fehlfunktion auftritt, anhand einer bijektiven Korrelation zwischen den Brennern (15) und den jeweiligen Signalen ($P_1$, $P_2$, ..., $P_N$) des dynamischen Drucks;
**gekennzeichnet durch**:

Berechnen von Frequenzspektren ($S_1(f)$, $S_2(f)$, ..., $S_N(f)$, $S_1^*(f)$, $S_2^*(f)$, ..., $S_N^*(f)$) der Signale ($P_1$, $P_2$, ... $P_N$) des dynamischen Drucks;
Erkennen von Fehlfunktionen der Brenner (15) in Übereinstimmung mit den Frequenzspektren ($S_1(f)$, $S_2(f)$, ..., $S_N(f)$, $S_1^*(f)$, $S_2^*(f)$, ..., $S_N^*(f)$).

2. Verfahren nach Anspruch 1, wobei das Berechnen von Frequenzspektren ($S_1(f)$, $S_2(f)$, ..., $S_N(f)$, $S_1^*(f)$, $S_2^*(f)$, ...,

$S_N$*(f)) Folgendes umfasst:

Berechnen anfänglicher Frequenzspektren ($S_1$(f), $S_2$(f), ..., $S_N$(f)) bei einem ersten Start der Anlage (1);
Berechnen eines anfänglichen Referenzspektrums ($S_{REF}$) anhand der anfänglichen Frequenzspektren ($S_1$(f), $S_2$(f), ..., $S_N$(f)); und
Erzeugen einer Alarmnachricht (MSG) im Fall einer Fehlfunktion.

**3.** Verfahren nach Anspruch 2, wobei das anfängliche Referenzspektrum ($S_{REF}$) in Übereinstimmung mit einem Mittelwert der anfänglichen Frequenzspektren ($S_1$(f), $S_2$(f), ..., $S_N$(f)) berechnet wird.

**4.** Verfahren nach Anspruch 2 oder 3, wobei das Erkennen von Fehlfunktionen der Brenner (15) Folgendes umfasst:

Bestimmen anfänglicher Abweichungen ($\Delta S_1$(f), $\Delta S_2$(f), ..., $\Delta S_N$(f)) der anfänglichen Frequenzspektren ($S_1$(f), $S_2$(f), ..., $S_N$(f)) in Bezug auf das anfängliche Referenzspektrum ($S_{REF}$);
Vergleichen der anfänglichen Abweichungen ($\Delta S_1$(f), $\Delta S_2$(f), ..., $\Delta S_N$(f)) mit einem anfänglichen Abweichungsschwellenwert (TH1(f)); und
Erkennen einer Fehlfunktion, falls eines der anfänglichen Frequenzspektren ($S_1$(f), $S_2$(f), ..., $S_N$(f)) den anfänglichen Abweichungsschwellenwert (TH1(f)) bei wenigstens einer Frequenz (f) überschreitet.

**5.** Verfahren nach einem der Ansprüche 2 bis 4, wobei das Berechnen von Frequenzspektren ($S_1$(f), $S_2$(f), ..., $S_N$(f), $S_1$*(f), $S_2$*(f), ..., $S_N$*(f)) Folgendes umfasst:

Berechnen aktualisierter Frequenzspektren ($S_1$*(f), $S_2$*(f), ..., $S_N$*(f)), die den anfänglichen Frequenzspektren ($S_1$(f), $S_2$(f), ..., $S_n$(f)) folgen; und
Berechnen eines aktualisierten Referenzspektrums ($S_{REF}$*) in Übereinstimmung mit den aktualisierten Frequenzspektren ($S_1$*(f), $S_2$*(f), ..., $S_N$*(f)).

**6.** Verfahren nach Anspruch 5, wobei das Erkennen von Fehlfunktionen der Brenner (15) Folgendes umfasst:

Bestimmen aktualisierter Abweichungen ($\Delta S_1$*(f), $\Delta S_2$*(f), ..., $\Delta S_N$*(f)) der aktualisierten Frequenzspektren ($S_1$*(f), $S_2$*(f), ..., $S_N$*(f)) in Bezug auf das anfängliche Referenzspektrum ($S_{REF}$);
Vergleichen der aktualisierten Abweichungen ($\Delta S_1$*(f), $\Delta S_2$*(f), ..., $\Delta S_N$*(f)) mit einem aktualisierten Abweichungsschwellenwert (TH4(f)); und
Erkennen einer Fehlfunktion, falls eines der aktualisierten Frequenzspektren ($S_1$*(f), $S_2$*(f), ..., $S_N$*(f)) den aktualisierten Abweichungsschwellenwert (TH4(f)) bei wenigstens einer Frequenz (f) überschreitet.

**7.** Verfahren nach Anspruch 5 oder 6, wobei das Erkennen von Fehlfunktionen der Brenner (15) das Bestimmen einer Fehlfunktion umfasst, falls eine Differenz zwischen dem aktualisierten Referenzspektrum ($S_{REF}$*(f)) und dem anfänglichen Referenzspektrum ($S_{REF}$(f)) einen Referenzschwellenwert (TH2(f)) bei wenigstens einer Frequenz (f) überschreitet.

**8.** Verfahren nach Anspruch 7, wobei das Erkennen von Fehlfunktionen der Brenner (15) Folgendes umfasst:

Aktualisieren einer historischen Reihe (SH) von Referenzspektren, falls die Differenz zwischen dem aktualisierten Referenzspektrum ($S_{REF}$*(f)) und dem anfänglichen Referenzspektrum ($S_{REF}$(f)) bei jeder Frequenz (f) kleiner als der Referenzschwellenwert (TH2(f)) ist;
Berechnen einer Variation zwischen den letzten Werten der historischen Reihe (SH); und
Bestimmen einer Fehlfunktion, falls die Variation zwischen den letzten Werten der historischen Reihe (SH) einen Variationsschwellenwert (TH3) überschreitet.

**9.** Verfahren nach einem der Ansprüche 5 bis 8, wobei das Erkennen von Fehlfunktionen der Brenner (15) Folgendes umfasst:

Bestimmen von Spitzenfrequenzen ($f_1$, ..., $f_M$) des anfänglichen Referenzspektrums ($S_{REF}$(f));
Bestimmen von Unterbändern ($\Delta f_1$, ..., $\Delta f_M$) um die Spitzenfrequenzen ($f_1$, ..., $f_M$);
Bestimmen von spektralen Beiträgen jedes aktualisierten Spektrums ($S_1$*(f), $S_2$*(f), ..., $S_N$*(f)) in jedem Unterband ($\Delta f_1$, ..., $\Delta f_M$);
Vergleichen der spektralen Beiträge jedes aktualisierten Spektrums ($S_1$*(f), $S_2$*(f), ..., $S_N$*(f)) in den Unterbän-

dern ($\Delta f_1$, ..., $\Delta f_M$) miteinander; und
Erkennen von Fehlfunktionen in Übereinstimmung mit dem Vergleich.

10. Verfahren nach Anspruch 9, wobei das Bestimmen spektraler Beiträge das Integrieren der aktualisierten Spektren ($S_1^*(f)$, $S_2^*(f)$, ..., $S_N^*(f)$) in den Unterbändern ($\Delta f_1$, ..., $\Delta f_M$) umfasst.

11. Verfahren nach Anspruch 9, wobei das Bestimmen spektraler Beiträge das Bestimmen von Maxima der aktualisierten Spektren ($S_1^*(f)$, $S_2^*(f)$, ..., $S_N^*(f)$) in den Unterbändern ($\Delta f_1$, ..., $\Delta f_M$) umfasst und wobei das Vergleichen der spektralen Beiträge miteinander das Vergleichen der Maxima miteinander umfasst.

## Revendications

1. Procédé de détection de dysfonctionnements dans une chambre de combustion d'une installation de turbine à gaz présentant une pluralité de brûleurs (15), le procédé comprenant :

la fourniture de signaux de pression dynamique (P1, PS, ..., PN) indiquant chacun une pression dynamique sur un brûleur respectif (15) ;
l'identification de chaque brûleur (15) soumis au dysfonctionnement sur la base d'une corrélation bijective entre les brûleurs (15) et les signaux de pression dynamique respectifs ($P_1$, $P_2$, ..., $P_N$) ;
**caractérisé par** :

le calcul de spectres de fréquences ($S_1(f)$, $S_2(f)$, ..., $S_N(f)$, $S_1^*(f)$, $S_2^*(f)$, ..., $S_N^*(f)$) des signaux de pression dynamique ($P_1$, $P_2$, ..., $P_N$) ;
la reconnaissance de dysfonctionnements des brûleurs (15) selon les spectres de fréquences ($S_1(f)$, $S_2(f)$, ..., $S_N(f)$, $S_1^*(f)$, $S_2^*(f)$, ..., $S_N^*(f)$).

2. Procédé selon la revendication 1, dans lequel le calcul de spectres de fréquences ($S_1(f)$, $S_2(f)$, ..., $S_N(f)$, $S_1^*(f)$, $S_2^*(f)$, ..., $S_N^*(f)$) comprend :

le calcul de spectres de fréquences initiaux ($S_1(f)$, $S_2(f)$, ..., $S_N(f)$) à un premier démarrage de l'installation;
le calcul d'un spectre de référence initial ($S_{RIF}$) sur la base des spectres de fréquences initiaux ($S_1(f)$, $S_2(f)$, ..., $S_N(f)$); et
la génération d'un message d'alarme (MSG) en cas de dysfonctionnement.

3. Procédé selon la revendication 2, dans lequel le spectre de référence initial ($S_{RIF}$) est calculé selon une moyenne des spectres de fréquence initiaux ($S_1(f)$, $S_2(f)$, ..., $S_N(f)$).

4. Procédé selon la revendication 2 ou 3, dans lequel la reconnaissance de dysfonctionnements des brûleurs (15) comprend :

la détermination de déviations initiales ($\Delta S_1(f)$, $\Delta S_2(f)$, ..., $\Delta S_N(f)$) des spectres de fréquence initiaux ($S_1(f)$, $S_2(f)$, ..., $S_N(f)$) par rapport au spectre de référence initial ($S_{RIF}$) ;
la comparaison des déviations initiales ($\Delta S_1(f)$, $\Delta S_2(f)$, ..., $\Delta S_N(f)$) avec un seuil de déviation initiale (TH1(f)) ; et
la reconnaissance d'un dysfonctionnement si un des spectres de fréquence initiaux ($S_1(f)$, $S_2(f)$, ... , $S_N(f)$) excède le seuil de déviation initiale (TH1(f)) sur au moins une fréquence.

5. Procédé selon l'une quelconque des revendications 2 à 4, dans lequel le calcul de spectres de fréquences ($S_1(f)$, $S_2(f)$, ..., $S_N(f)$, $S_1^*(f)$, $S_2^*(f)$, ..., $S_N^*(f)$) comprend :

le calcul de spectres de fréquences mis à jour ($S_1^*(f)$, $S_2^*(f)$, ... , $S_N^*(f)$) suivant les spectres de fréquence initiaux ($S_1(f)$, $S_2(f)$, ..., $S_N(f)$) ; et
le calcul d'un spectre de référence mis à jour ($S_{RIF}^*$) selon les spectres de fréquences mis à jour ($S_1^*(f)$, $S_2^*(f)$, ..., $S_N^*(f)$).

6. Procédé selon la revendication 5, dans lequel la reconnaissance de dysfonctionnements des brûleurs (15) comprend :

la détermination de déviations mises à jour ($\Delta S_1^*(f)$, $\Delta S_2^*(f)$, ..., $\Delta S_N^*(f)$) des spectres de fréquence mis à jour ($S_1^*(f)$, $S_2^*(f)$, ..., $S_N^*(f)$) par rapport au spectre de référence initial ($S_{RIF}$) ;

la comparaison des déviations mises à jour ($\Delta S_1^*(f)$, $\Delta S_2^*(f)$, ..., $\Delta S_N^*(f)$) avec un seuil de déviation mis à jour ($TH4(f)$) ; et

la reconnaissance d'un dysfonctionnement si un des spectres de fréquences mis à jour ($S_1^*(f)$, $S_2^*(f)$, ..., $S_N^*(f)$) excède le seuil de déviation mis à jour ($TH4(f)$) sur au moins une fréquence ($f$).

7. Procédé selon la revendication 5 ou 6, dans lequel la reconnaissance de dysfonctionnements des brûleurs (15) comprend la détermination d'un dysfonctionnement si une différence entre le spectre de référence mis à jour ($S_{FEF}^*(f)$) et le spectre de référence initial ($S_{REF}(f)$) excède un seuil de référence ($TH2(f)$) sur au moins une fréquence ($f$).

8. Procédé selon la revendication 7, dans lequel la reconnaissance de dysfonctionnements des brûleurs (15) comprend :

la mise à jour d'une série historique (SH) de spectres de référence si la différence entre le spectre de référence mis à jour ($S_{REF}^*(f)$) et le spectre de référence initial ($S_{REF}(f)$) est inférieure au seuil de référence ($TH2(f)$) sur chaque fréquence ($f$) ;

le calcul d'une variation entre les dernières valeurs de la série historique (SH) ; et

la détermination d'un dysfonctionnement si la variation entre les dernières valeurs des séries historiques (SH) excède un seuil de variation ($TH3$).

9. Procédé selon l'une quelconque des revendications 5 à 8, dans lequel la reconnaissance de dysfonctionnements des brûleurs (15) comprend :

la détermination de fréquences de pointe ($f_1$, ..., $f_M$) du spectre de référence initial ($S_{REF}(f)$) ;

la détermination de sous-bandes ($\Delta f_1$, ..., $\Delta f_M$) sur les fréquences de pointe ($f_1$, ..., $f_M$) ;

la détermination de contributions spectrales de chaque spectre mis à jour ($S_1^*(f)$, $S_2^*(f)$, ..., $S_N^*(f)$) dans chaque sous-bande ($\Delta f_1$, ..., $\Delta f_M$) ;

la comparaison des contributions spectrales de chaque spectre mis à jour ($S_1^*(f)$, $S_2^*(f)$, ..., $S_N^*(f)$) dans les sous-bandes ($\Delta f_1$, ..., $\Delta f_M$) les unes avec les autres ; et

la reconnaissance de dysfonctionnements selon la comparaison.

10. Procédé selon la revendication 9, dans lequel la détermination de contributions spectrales comprend l'intégration des spectres mis à jour ($S_1^*(f)$, $S_2^*(f)$, ..., $S_N^*(f)$) dans les sous-bandes ($\Delta f_1$, ..., $\Delta f_M$).

11. Procédé selon la revendication 9, dans lequel la détermination de contributions spectrales comprend la détermination de maximums des spectres mis à jour ($S_1^*(f)$, $S_2^*(f)$, ..., $S_N^*(f)$) dans les sous-bandes ($\Delta f_1$, ..., $\Delta f_M$) et dans lequel la comparaison des contributions spectrales les unes avec les autres comprend la comparaison des maximums les uns avec les autres.

Fig.1

EP 2 748 445 B1

## Fig.2

## Fig.3

Fig.4

ACQUIRE SERIES $P_1$, $P_2$, ..., $P_N$ — 100

DETERMINE
INITIAL SPECTRA $S_1(f)$, $S_2(f)$, ..., $S_N(f)$ — 110

DETERMINE
INITIAL REFERENCE SPECTRUM $S_{REF}(f)$ — 120

CALCULATE
INITIAL DEVIATIONS $\Delta S_1(f)$, $\Delta S_2(f)$, ..., $\Delta S_N(f)$ — 130

DETERMINE CHARACTERISTIC PARAMETERS — 140

YES                     NO

$\Delta S_1(f) < TH1(f)$

150                     170

RECORD MALFUNCTION
GENERATE MSG

160 — END

Fig.5

DETERMINE
UPDATED SPECTRA $S_1^*(f)$, $S_2^*(f)$, ..., $S_N^*(f)$
UPDATED REFERENCE SPECTRUM $S_{REF}^*(f)$
UPDATED DEVIATIONS $\Delta S_1^*(f)$, $\Delta S_2^*(f)$, ..., $\Delta S_N^*(f)$ — 200

$S_{REF}^*(f) - S_{REF}(f) < TH2(f)$
YES — 250    NO
230 — RECORD MALFUNCTION GENERATE MSG

UPDATE HISTORICAL SERIES — 220

CALCULATE VARIATION BETWEEN LAST VALUES OF HISTORICAL SERIES SH — 240

VARIATION OF HISTORICAL SERIES SH > TH3
YES — 250    NO
260 — RECORD MALFUNCTION GENERATE MSG

$\Delta S_1(f) < TH4(f)$
YES — 270    NO
275 — RECORD MALFUNCTION GENERATE MSG

$\Delta S_1(f) < TH3$
YES — 280    NO
290 — RECORD MALFUNCTION GENERATE MSG

295 — END

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2008080639 A1